**Europäisches Patentamt**

**European Patent Office**

**Office européen des brevets**

(19)

(11) Veröffentlichungsnummer : **0 340 206 B1**

(12) # EUROPÄISCHE PATENTSCHRIFT

(45) Veröffentlichungstag der Patentschrift :
**27.11.91 Patentblatt 91/48**

(51) Int. Cl.⁵ : **G01M 15/00**

(21) Anmeldenummer : **89890112.9**

(22) Anmeldetag : **18.04.89**

(54) **Verfahren und Motorprüfstand zur Bestimmung dynamischer Messgrössen von Brennkraftmaschinen.**

(30) Priorität : **25.04.88 AT 1049/88**

(43) Veröffentlichungstag der Anmeldung :
**02.11.89 Patentblatt 89/44**

(45) Bekanntmachung des Hinweises auf die
Patenterteilung :
**27.11.91 Patentblatt 91/48**

(84) Benannte Vertragsstaaten :
**AT DE FR GB IT SE**

(56) Entgegenhaltungen :
**US-A- 4 466 294**
**US-A- 4 680 959**

(73) Patentinhaber : **AVL Gesellschaft für
Verbrennungskraftmaschinen und
Messtechnik mbH.Prof.Dr.Dr.h.c. Hans List
Kleiststrasse 48
A-8020 Graz (AT)**

(72) Erfinder : **Fischer, Karl Franz Robert, Dipl.-Ing.
Dr.
Freiheitsplatz 2
A-8010 Graz (AT)**

(74) Vertreter : **Krause, Walter, Dr. Dipl.-Ing. et al
Postfach 200 Singerstrasse 8
A-1014 Wien (AT)**

## Beschreibung

Die Erfindung betrifft ein Verfahren zur Bestimmung dynamischer Meßgrößen von Brennkraftmaschinen, beispielsweise von Beschleunigungs-, Abgas-, Drehzahl- und Drehmomentwerten, wobei die zu prüfende Brennkraftmaschine an eine Belastungseinheit gekuppelt wird und die dynamischen Meßgrößen der Brennkraftmaschine einer Rechnereinheit zugeführt werden, sowie einen Motorenprüfstand zur Erfassung dieser dynamischen Meßgrößen.

Um eine Brennkraftmaschine dynamisch zu untersuchen, beispielsweise in Hinblick auf das Verhalten bei der Belastung im KFZ durch gesetzlich vorgeschriebene Abgastestzyklen, ist es zumeist notwendig, die Brennkraftmaschine in ein Fahrzeug einzubauen und auf einem Rollenprüfstand zu testen. Eine weitere Möglichkeit ist dadurch gegeben, den Motor und das Getriebe auf einem Schwungmassenprüfstand aufzubauen.

Beide Möglichkeiten sind aufwendig und bringen Probleme mit der Reproduzierbarkeit der Ergebnisse mit sich, vor allem durch Änderungen im Verhalten des Fahrers bzw. der den Prüfstand bedienenden Person sowie durch unterschiedliche Schaltabläufe.

Aus der US-PS 4680959 ist ein Motorprüfstand bekannt, auf welchem das komplette Fahrzeug samt Schaltgetriebe und Fahrer simuliert wird. Die Vorteile einer solchen Simulation liegen auf der Hand, da eine genaue Reproduzierbarkeit der einzelnen Parameter erreicht wird und der Einbau der Brennkraftmaschine in ein Kraftfahrzeug entfällt. Dabei stellt sich nach Vorgabe der Drehzahl an die Belastungseinheit ein bestimmtes Moment ein. Nachteilig ist dabei, daß Momentsprünge nicht direkt vorgebbar sind. Es kann lediglich durch geeignete Vorgabe von Drehzahlsollwerten versucht werden, gewünschte Momentsprünge zu erreichen. Bei der Leerlaufsimulation wird auf eine vordefinierte Leerlaufdrehzahl geregelt, wobei das sich dabei einstellende Moment nicht unbedingt gleich dem wirklichen Leerlaufmoment sein muß, da die Motortemperatur und andere Größen einen Einfluß auf die Leerlaufdrehzahl haben. Weiters können mit diesem Verfahren dynamische Effekte des Antriebsstranges nicht nachgebildet werden und Schaltvorgänge treten nachteiligerweise als plötzliche Sprünge im Verlauf der Soll-Motordrehzahl und des Soll-Wellenmomentes auf.

Weiters ist die sogenannte Online-Methode bekannt, mit der dynamische Meßgrößen von Brennkraftmaschinen sowie deren zeitliche Veränderung bei der Variation der Eingangsparameter in Echtzeit erfaßt werden. Mit herkömmlichen Verfahren können zwar Schaltgetriebe und deren Auswirkung auf die Brennkraftmaschine simuliert werden, Schwierigkeiten würden jedoch im Zusammenhang mit der Simulation von Automatikgetrieben — wie im folgenden dargelegt — auftreten.

Ein Automatikgetriebe kann man nach funktionellen Gesichtspunkten in einen Getriebeteil und einen Steuerungsteil gliedern. Letzterer besteht aus der Steuerplatte und einem elektronischen Teil zur Festlegung der Schaltzeitpunkte.

Der Getriebeteil umfaßt den Wandler, eventuell die Wandlerüberbrückung, die Planetensätze, Kupplungen, vorzugsweise Lamellenkupplungen oder Bandbremsen und zumeist Freiläufe. Aufgrund dieser Bauweise kann ohne Zugkraftunterbrechung unter Last geschaltet werden.

Exakterweise müßte nun der Wandler in der Simulation durch sein dynamisches Kennfeld dargestellt werden, was beispielsweise aus "Untersuchung des dynamischen Verhaltens von Föttinger-Getrieben" R. Herbertz, Dissertation 1973, Hannover, bekannt ist. Eine wichtige Erkenntnis daraus ist, daß der Wandler nur bedingt schwingungstrennend wirkt. Hochfrequente Störungen werden zwar gefiltert, tieffrequente gehen aber ungehindert über den Wandler. Der Wandler hat ein eigenes Feder-/Dämpfungsverhalten. In Zusammenwirkung mit der Feder- und der Dämpfungskonstante des Antriebsstranges des Kraftfahrzeuges kann man die dominante Eigenfrequenz und das Dämpfungsverhalten des Gesamtsystems errechnen.

Dabei ergeben sich drei Probleme : Erstens hat der Anwender zumeist das Interesse, die Eigenfrequenz und das Dämpfungsverhalten des Systems Motor-Wandler-Antriebsstrang-Kraftfahrzeug vorgeben zu können, zweitens sind die Feder- und die Dämpfungskonstante des Antriebsstranges für sich selten bekannt und lassen sich durch Wechselwirkung mit dem dynamischen Kennfeld auch nur schwer ermitteln. Drittens ist das dynamische Wandlerkennfeld, welches mathematisch nur relativ kompliziert als Vierpol mit für jeden Betriebszustand unterschiedlichen Übertragungsfunktionen beschrieben werden kann, dem Anwender selten bekannt. Außerdem kann die Online-Methode bei Verwendung des dynamischen Kennfeldes bei der Simulation aufgrund des rechentechnischen Aufwandes praktisch nicht angewandt werden.

Aufgabe der Erfindung ist es, ein Verfahren sowie einen Motorenprüfstand vorzuschlagen, mit welchen die Bestimmung dynamischer Meßgrößen in zufriedenstellender Weise möglich ist, wobei die Online-Methode angewandt werden soll und dynamische Effekte möglichst wirklichkeitsnah nachgebildet werden können.

Diese Aufgabe wird dadurch gelöst, daß bei einem Verfahren der eingangs genannten Art der Betrieb eines Kraftfahrzeuges mit Automatikgetriebe in der Rechnereinheit simuliert wird, wobei das System Brennkraftmaschine-Kraftfahrzeug als Zwei-Massen-Schwinger mit einem bestimmten Feder- und Dämpfungswert dargestellt wird, welcher über den Wandler des Automatikgetriebes, dargestellt durch sein stationäres

2

Wandlerkennfeld, gekoppelt wird, daß der Simulation einzelner Betriebszustände des Kraftfahrzeuges entsprechende Steuersignale erzeugt und an die Brennkraftmaschine sowie an die Belastungseinheit abgegeben werden, sowie daß die dabei gewonnenen dynamischen Meßgrößen eindeutig einzelnen Betriebszuständen des simulierten Kraftfahrzeuges zugeordnet werden. Überraschenderweise hat sich gezeigt, daß das Simulationsverfahren mit dem Grundmodell eines Zwei-Massen-Schwingers in Verbindung mit dem mathematisch wesentlich einfacher zu handhabenden stationären Wandlerkennfeld sehr gut die grundlegenden dynamischen Vorgänge einer Brennkraftmaschine in einem Kraftfahrzeug mit Automatikgetriebe nachbilden kann. Dem Anwender liegt dabei vom Getriebehersteller das stationäre Wandlerkennfeld vor. Bei gegebenem Drehzahlverhältnis am Wandler kann man daraus die entsprechenden Wandlermomente berechnen. Durch die Verknüpfung mit dem Modell eines Zwei-Massen-Schwingers werden die im stationären Kennfeld verborgenen dynamischen Effekte sichtbar gemacht.

Erfindungsgemäß kann der Feder- und der Dämpfungswert des Systems Brennkraftmaschine-Kraftfahrzeug aus der vorgebbaren Eigenfrequenz und aus dem gewünschten Dämpfungsverhalten des Systems Brennkraftmaschine-Kraftfahrzeug ermittelt werden. Die Feder- und die Dämpfungskonstante des Gesamtsystems wird man nun nicht mehr als solche bezeichnen, da sie der theoretischen Definition in Kombination mit dem stationären Wandlerkennfeld nicht mehr entsprechen. Deshalb werden diese Größen nun als Feder- und Dämpfungswert bezeichnet. Das erfindungsgemäße Verfahren geht von folgenden mathematischen Überlegungen aus :

Die Abtriebsdrehzahl KFZ und die Motordrehzahl nr und nm seien aufgrund eines vorausgegangenen Berechnungsschrittes oder aufgrund der Definition von Anfangsbedingungen vorgegeben. Es muß nun jener Wert der Abtriebsdrehzahl nh des Wandlers gefunden werden, durch den sowohl das Verhalten des Wandlers als auch das Verhalten des Feder-Dämpfungselementes richtig wiedergegeben wird.

Zu diesem Zweck wird folgenderweise vorgegangen :

Der durch das Feder-Dämpfungselement gegebene Wert des Wandler-Abtriebsmomentes Mhw (FD) läßt sich folgendermaßen berechnen :

```
Mhw(FD)  = d . (nh - nr) + cl

         cl .. Größe, die den Spannungszustand der Feder re-
               präsentiert.
```

Das über den Wandler übertragene Moment ist durch eine Funktion f der Art

$$Mhw(W) = f (nm, (nh/nm))$$

gegeben. Mit Hilfe der 'regula falsi' wird der Wert nh in beiden Funktionen solange variiert, bis die Ergebnisse Mhw(FD) und Mhw(W) übereinstimmen.

Zum besseren Verständnis der Erfindung sei auf folgende Zeichnungen verwiesen : Es zeigen

| | |
|---|---|
| Fig. 1 | einen erfindungsgemäßen Motorenprüfstand, |
| Fig. 2 | ein Blockmodell des Motorenprüfstandes, |
| Fig. 3 | ein Grundmodell des erfindungsgemäßen Simulationsverfahrens, |
| Fig. 4 | ein stationäres Wandlerkennfeld, |
| Fig. 5 | in Gesamtmodell des Simulationsverfahrens, |
| Fig. 6a | ein Getriebeersatzmodell |
| Fig. 6b | dessen Blockdarstellung, |
| Fig. 7a und 7b | Schaltkennfelder, sowie die |
| Fig. 8 bis 12 | den zeitlichen Verlauf der Motor- und Abtriebsdrehzahl nm und nr, bzw. des Wellen- und Abtriebsmomentes Mw und Ma, wobei in den Fig. 8, 9, 11 an einem Schwungmassenprüfstand gemessene und in den |
| Fig. 10 und 12 | mittels Simulationsverfahren erhaltene Werte vorliegen. In den einzelnen Fig. sowie im folgenden Text werden folgende Formelzeichen und Abkürzungen verwendet : |

```
c     ...  Federwert
d     ...  Dämpfungswert
dt    ...  Zeitdifferential
eta   ...  Wirkungsgrad Abtrieb
i     ...  Übersetzung, wenn "Normale" Kupplung geschlos-
           sen ist
iha   ...  Hinterachsübersetzung
```

$I_{mot}$ ... Motorträgheit

$I_{kfz}$ ... Fahrzeugträgheit

$I_{p}$ ... Wandlerpumpenträgheit

```
iu    ...  Übersetzung, wenn überschneidende Kupplung ge-
```

schlossen ist

Kn ... anfangs (im Normalfall) geschlossene Kupplung

Ku ... zuschaltende (überschneidende) Kupplung

konst .. Umrechnungsfaktor für nicht kohärente Einheiten

lh ... Lasthebelstellung Motor

lhs ... Lasthebelsignal (=lh mit Kickdown)

ls ... Getriebelastsignal

lsmax .. maximaler Wert von ls

lss .. Laststeuerungssignal (=ls mit Kickdown)

LW ... Leistungswert Wandler

M ... Momente

Ma ... Abtriebsmoment Fahrzeug

Mak .. angefordertes Moment an der anfangs geschlossenen Kupplung

Mb .. Bremsmoment

Me . effektives Motormoment

Mfw .. Fahrwiderstand

Mg .. Abtriebsmoment Getriebe

Mh . Moment nach Wandlerabtrieb und -überbrückung

Mhw . Abtriebsmoment Wandler

Mk . Kupplungsmoment

Mkn . Kupplungsmomentangebot der anfangs (im Normalfall) geschlossenen Kupplung

Mku .. Kupplungsmoment der zuschaltenden (überschneidenden) Kupplung

Mp .. Moment vor Wandlerpumpe und -überbrückung

Mpw .. Pumpenmoment Wandler

Mq .. quasistationäres Widerstandsmoment

Ms .. Stellmoment Prüfstandsbremse

Mu .. Wandlerüberbrückungsmoment

Mvg .. Verlustmoment Getriebe

Mvp .. Verlustmoment Ölpumpe Wandler

Mvu .. Verlustmoment bei Kupplungsüberschneidung

Mw .. Wellenmoment (=Abtriebsmoment) Motor

n ..... Drehzahlen

ng .. Eingangsdrehzahl Getriebe

nh .. Abtriebsdrehzahl Wandler

nk .. Eingangsdrehzahl an der anfangs geschlossenen Kupplung

nku .. Eingangsdrehzahl an der zuschaltenden Kupplung

nm .. Motordrehzahl

5

| nr | .. | Abtriebsdrehzahl KFZ bzw. Schwungmasse |
|---|---|---|
| nv | .. | berechnete Abtriebsdrehzahl KFZ (für Schwung-massenprüfstand) |
| SR | .... | Speed Ratio Wandler (=nh/nm) |
| SSR | ... | Speed Ratio im Schubbereich (1/SR) |
| t | .... | Zeit |
| TR | .... | Torque Ratio Wandler (=Mhw/Mpw) |
| v | .... | Geschwindigkeit |
| $v_{ist}$ | .. | Ist-Geschwindigkeit |
| $v_{soll}$ | .. | Soll-Geschwindigkeit |
| whs | ... | Wahlhebelstellung |

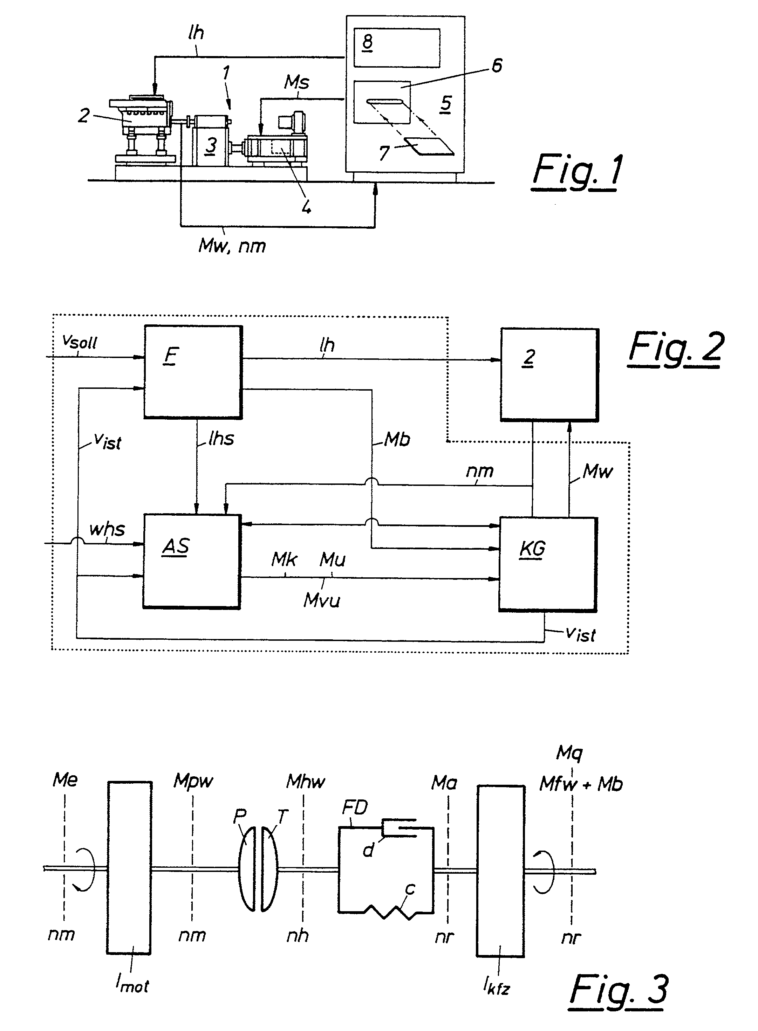

Der in Fig. 1 dargestellte—später noch ausführlicher zu beschreibende—erfindungsgemäße dynamische Motorenprüfstand weist eine an eine Belastungseinheit 1 gekuppelte zu prüfende Brennkraftmaschine 2 auf, wobei die im dargestellten Beispiel aus einem Riementrieb 3 und einer elektrischen Brems- und Antriebseinheit 4 bestehende Belastungseinheit 1 zusammen mit der Rechnereinheit 5 eine die Betriebszustände eines Kraftfahrzeuges mit Automatikgetriebe simulierende Einheit darstellt.

Erfindungsgemäß ist weiters vorgesehen, daß ein von der Geschwindigkeit v des simulierten Kraftfahrzeuges und einem Laststeuerungssignal lss der Brennkraftmaschine abhängiges Schaltkennfeld zur Darstellung der Automatiksteuerung des Automatikgetriebes verwendet wird, wobei die für die Getriebesteuerung notwendigen Eingangsgrößen, wie Fahrzeuggeschwindigkeit v und Getriebelastsignal ls errechnet, die Motordrehzahl nm und die Lasthebelstellung lh erfaßt und der Rechnereinheit zugeführt werden. Aus dem Schaltkennfeld läßt sich ermitteln, wann geschaltet wird. Durch die Simulation unterschiedlicher Schaltkennfelder können somit bei Automatikgetrieben die Schaltzeitpunkte im Hinblick auf unterschiedliche Motorkenngrößen optimal eingestellt werden.

In Fig. 2 ist ein Blockmodell des dynamischen Motorenprüfstandes dargestellt, wobei die vom Simulationsverfahren erfaßten Bauteile, wie Kraftfahrzeug samt Getriebe KG, Automatiksteuerung AS und Fahrer F durch eine punktierte Linie zusammengefaßt sind. Der Austausch von Meß- bzw. Steuergrößen untereinander, sowie mit der Brennkraftmaschine 2 am Prüfstand ist durch entsprechende Verbindungslinien dargestellt. Der Block Automatiksteuerung AS hat die Aufgabe, die reale Getriebesteuerung nachzubilden.

Der simulierte Fahrer F kann nun mittels Lasthebelstellung lh das effektive Motormoment Me derart verändern, daß die Istgeschwindigkeit $v_{ist}$ nicht zu stark von der Sollgeschwindigkeit $V_{soll}$ abweicht. Im Bedarfsfall betätigt er die simulierte Betriebsbremse (Bremsmoment Mb).

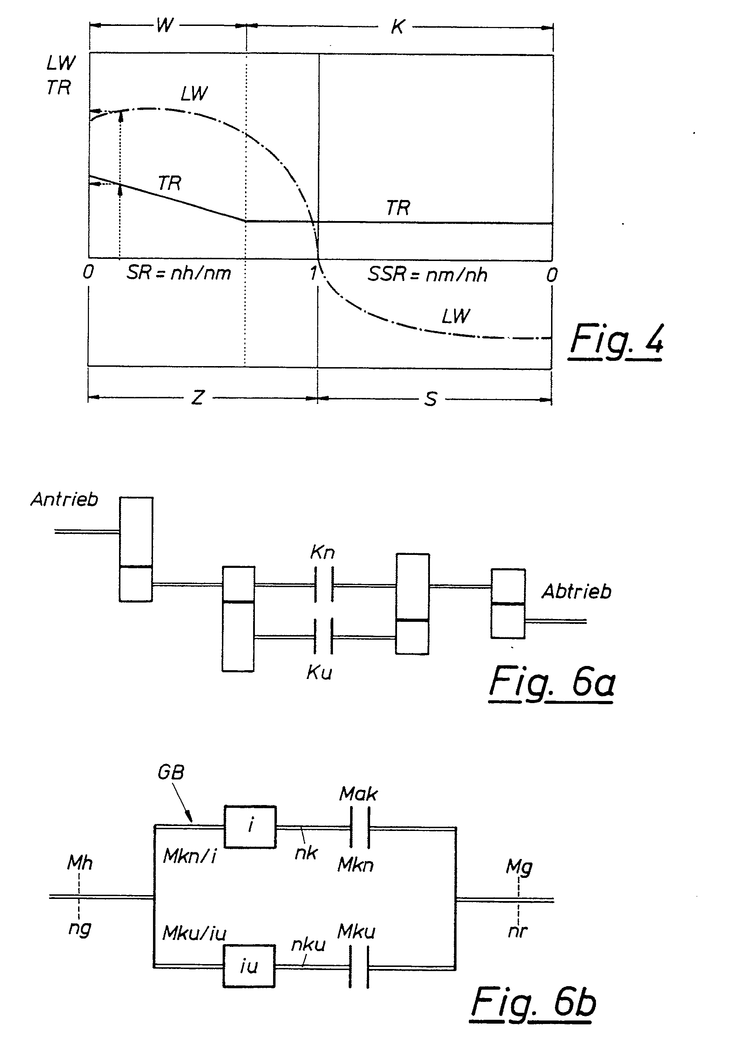

Um bei der rechnerischen Verwicklichung des Simulationsverfahrens die dynamischen Anforderungen zu erfüllen und den Aufwand für die Parametrierung in vertretbaren Grenzen zu halten, wird entsprechend Fig. 3 das stationäre Wandlerkennfeld (siehe auch Fig. 4) des schematisch durch eine Pumpenseite P und eine Turbinenseite T dargestellten Wandlers und ein Feder-/Dämpfungsteil FD aneinandergekoppelt. Die Trägheit des Motors bzw. des Kraftfahrzeuges dieses Zwei-Massen-Schwingers sind mit $I_{MOT}$ bzw $I_{KFZ}$ bezeichnet, die Feder- bzw. Dämpfungsgrößen des Feder-/Dämpfungsteiles mit c bzw. d. Die in den einzelnen Bereichen des Grundmodells auftretenden Momente und Drehzahlen sind oberhalb bzw. unterhalb der waagrechten, die einzelnen Komponenten verbindenden Kraftflußlinie dargestellt.

Aus Fig. 4 ist ein stationäres Wandlerkennfeld ersichtlich, welches eine der Grundlagen für das erfindungsgemäße Verfahren bildet. Als Basis des Diagramms dient die Speed Ratio SR, das Verhältnis der Drehzahlen an der Pumpenseite nm und an der Turbinenseite nh. Im Schubbereich S, d.h., wenn nm kleiner als nh ist, würde SR im Extremfall gegen unendlich gehen. Um die Darstellung zu erleichtern, wird in diesem Bereich das Drehzahlverhältnis umgekehrt und mit SSR bezeichnet. Abhängig von SR bzw. SSR läßt sich nun die Leistungszahl LW und die Torque Ratio TR bestimmen. Die Leistungszahl gibt den Zusammenhang zwischen Pumpendrehzahl nm und dem Pumpenmoment Mpw an ($Mpw = LW.nm^2$). Die Torque Ratio gibt das Verhältnis zwischen dem Wandlerabtriebsmoment Mhw und dem Pumpenmoment Mpw an ($Mhw = TR.Mpw$). Solange sich das Leitrad des Wandlers abstützt, ist das Abtriebsmoment Mhw des Wandlers größer als das Pumpenmoment Mpw. Dieser Bereich wird als Wandlungsbereich W bezeichnet. Löst sich das Leitrad, wie dies in den meisten Betriebszuständen der Fall ist, wirkt der Wandler nur mehr als hydraulische Kupplung, an beiden Seiten hat das Moment den selben Wert. Dieser Bereich heißt deshalb auch Kupplungsbereich K. So kann man aus den Drehzahlen die Momente bestimmen. Es müssen keine Verluste bzw. Wirkungsgrade berücksichtigt werden, da diese in den Kennzahlen inkludiert sind.

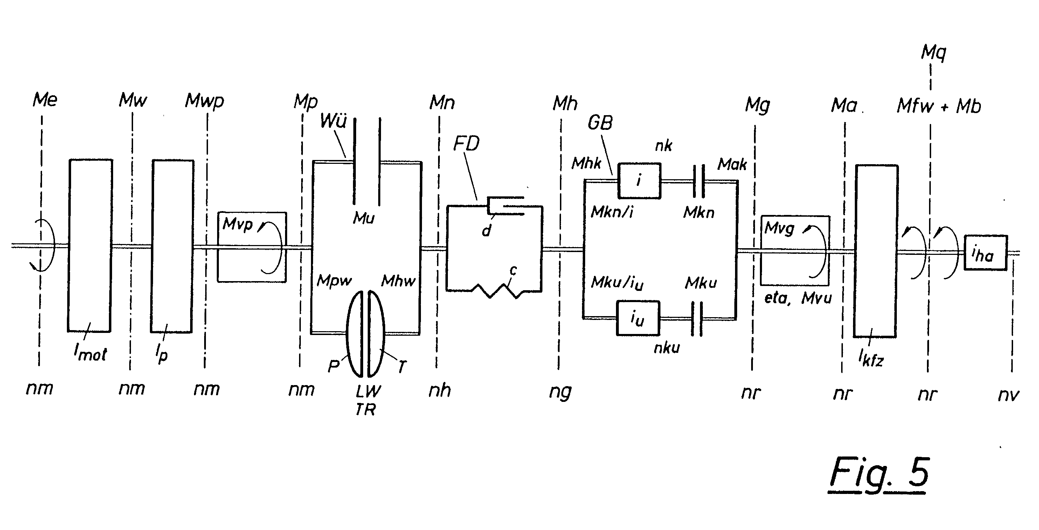

In einer Weiterbildung des erfindungsgemäßen Verfahrens ist vorgesehen, daß eine bei bestimmten Betriebszuständen wirksam werdende Wandlerüberbrückung, welche im Kraftfluß parallel zum Wandler des Automatikgetriebes angeordnet ist, berücksichtigt wird. Um weitere Betriebszustände simulieren zu können, wird das Grundmodell zunächst um die Wandlerüberbrückung Wü erweitert. Diese muß — wie aus Fig. 5 ersichtlich — parallel zum Wandler wirken. Das entsprechende Wandlerüberbrückungsmoment ist mit Mu bezeichnet.

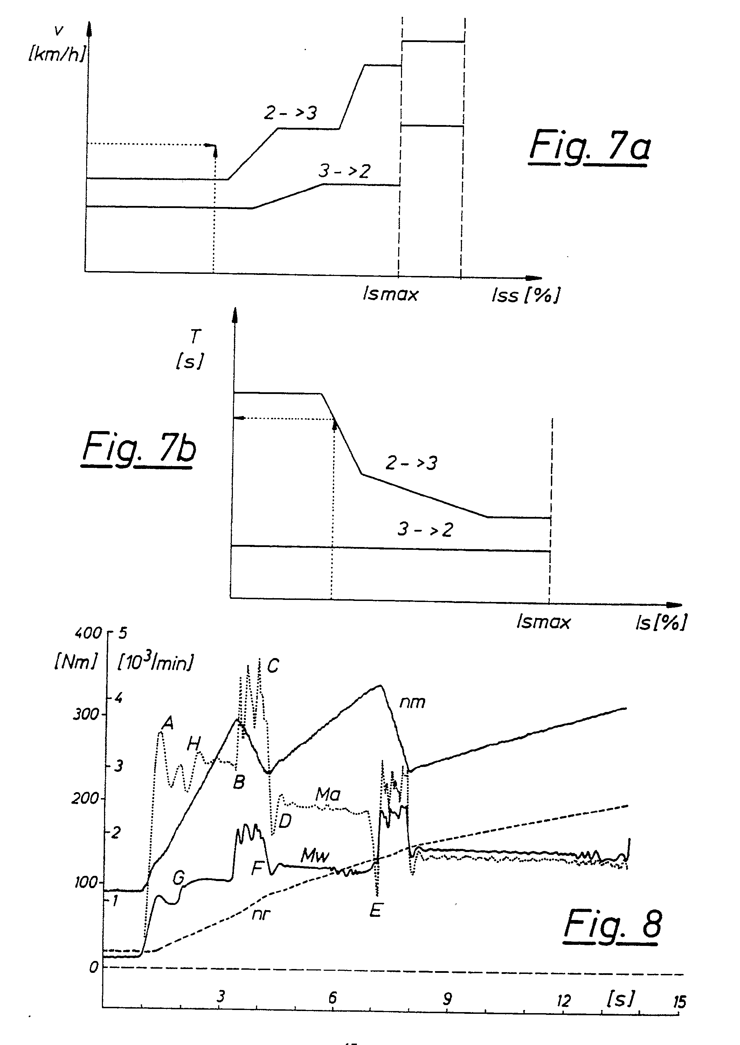

Von den im Getriebeteil des Automatikgetriebes vorhandenen Kupplungen sind bei Schaltvorgängen jeweils lediglich zwei Kupplungen aktiv. Auch bei Gruppenschaltungen kann unter Annahme eines massenlosen Getriebes der Schaltvorgang wieder auf zwei Kupplungen reduziert werden. Dem Rechnung tragend, zeigt nun Fig. 6a ein Getriebeersatzmodell und Fig. 6b die dazugehörige Blockdarstellung. Damit soll nun ein Schaltvorgang nachvollzogen werden. Am Anfang ist die Kupplung Kn geschlossen, die Kupplung Ku offen und die Übersetzung i wirksam. Dann schließt zusätzlich die Kupplung Ku. Am Ende des Schaltvorganges ist die Kupplung Ku geschlossen, die Kupplung Kn offen und die Übersetzung iu wirksam. Eine der beiden Kupplungen kann auch durch einen Freilauf ersetzt werden. Der Getriebeblock GB entsprechend der Blockdarstellung in Fig. 6b ist ein Teil des Gesamtmodells nach Fig. 5.

Erfindungsgemäß ist weiters vorgesehen, daß die für das Getriebe und die Wandlerpumpe angenommenen oder berechneten Verlustmomente Mvg und Mvp bei Ansteuerung der Belastungseinheit additiv berücksichtigt werden. Das Verlustmoment der Wandlerpumpe Mvp bzw. das Verlustmoment des Getriebes Mvg, in welches neben reinen Getriebeverlusten auch der Wirkungsgrad des Abtriebes eta sowie das Verlustmoment bei Kupplungsüberschneidungen Mvu eingehen, ist ebenfalls in Fig. 5 Dargestellt. Die Kupplungsmomente Mkn und Mku sind natürlich nur während des Schaltvorganges relevant.

Wenn in den Übersetzungen die Hinterachsübersetzung iha enthalten ist, kann diese Größe gleich eins gesetzt werden. Wird ein Schwungmassenprüfstand ohne Hinterachsübersetzung simuliert, so werden für die Übersetzung nur die Getriebeübersetzungen verwendet. Um dann die Fahrgeschwindigkeit ermitteln zu können, muß für die Größe iha die Hinterachsübersetzung berücksichtigt werden.

Motor- und Wandlerpumpenträgheit ($I_{mot}$ und $I_p$) werden hier extra angesetzt, da der Motor beim Prüfstandsbetrieb nicht mitsimuliert wird. Die Nachbildung der Wandlerpumpenträgheit wird von der elektrischen Belastungs- und Antriebseinheit übernommen. Unberücksichtigte Trägheiten, die nach dem Wandler auftreten, werden der Fahrzeugträgheit zugeschlagen.

Das beschriebene Gesamtmodell hat sich — wie in einigen Beispielen noch gezeigt werden wird — beim Vergleich mit herkömmlichen Prüfstandsmessungen als sehr gut geeignet erwiesen. So wäre es z. B. nicht zweckmäßig, weitere Feder/Dämpfer-Masse-Elemente hinzuzufügen, da durch eine solche Erweiterung zusätzlich höherfrequente Schwingungen erzeugt werden, die den Wandler aber nicht passieren können. Dagegen könnte man ein Modell ohne Feder-/Dämpferelement nicht als "dynamisch" bezeichnen. Außerdem koppelt der Wandler alleine Motor- und Fahrzeugträgheit so steif aneinander, daß Probleme mit der Belastungseinheit dahingehend auftreten, daß geforderte Steuersignale nicht exekutiert werden können, beispielsweise, daß die notwendigen Brems- und Antriebsmomente nicht aufgebracht werden können.

Die Getriebesteuerung benötigt mehrere Eingangsgrößen, wie die Fahrzeuggeschwindigkeit oder die Motordrehzahl. Aus dem Lastzustand des Motors, der seinerseits eine Funktion der Lasthebelstellung lh und der Motordrehzahl nm ist, läßt sich das Getriebelastsignal ls berechnen. Genau wie beim realen Getriebe ist dieses Getriebelastsignal ls Basis für viele Kennfelder. Wird auch der Kickdown berücksichtigt, wird aus dem Getriebelastsignal ls das Laststeuerungssignal lss.

Abhängig vom Laststeuerungssignal lss und von der Geschwindigkeit v ist z.B. das Schaltkennfeld nach Fig. 7a, woraus sich die Schaltzeitpunkte ermitteln lassen. Dieses Kennfeld ist dem Anwender aus den Getriebedaten bekannt und wird für das Simulationsverfahren verwendet.

Nach dem Schaltbefehl beginnt der eigentliche Schaltvorgang nicht sofort, sondern erst nach dem Ablauf einer gewissen Totzeit T. Diese läßt sich aus dem Getriebelastsignal ls, entsprechend Fig. 7b, ermitteln.

Erfindungsgemäß kann auch vorgesehen sein, daß der Betriebszustand "Fahrzeugstillstand", während dem die Brennkraftmaschine gegen den Wandler des Automatikgetriebes arbeitet, durch eine Bremsfunktion realisiert wird. Bei der Simulation des Fahrers — der das "Fahrzeug" auch anhalten kann — muß im Vergleich zu Verfahren für Schaltgetriebe eine Bremsfunktion für den Stillstand des KFZ eingefügt werden, da in diesem Fall der Kraftfluß normalerweise bei Automatikgetrieben nicht unterbrochen wird.

Beim vorliegenden Simulationsverfahren können weitere Funktionen berücksichtigt werden. So können z.B. überrollbare Freiläufe verwendet werden, alle möglichen Fälle der Kupplungsüberschneidung werden erfaßt und verschiedene Wahlhebelstellungen des Automatikgetriebes können angenommen werden.

Der Anwender kann verschiebene Getriebekonfigurationen vorgeben. Auch diverse Funktionsweisen der Getriebesteuerung können ein- bzw. ausgeschaltet werden.

Schließlich ist in einer besondere Ausgestaltung des erfindungsgemäßen Verfahrens vorgesehen, daß der Rechnereinheit ein vorzugsweise für die Erfüllung bestimmter Normen, wie Abgasvorschriften oder Leistungswerte der Brennkraftmaschine, vorgeschriebenes Fahrprofil eingegeben wird.

Ein erfindungsgemäßer Motorenprüfstand zur Erfassung dynamischer Meßgrößen von Brennkraftmaschinen, beispielsweise von Beschleunigungs-, Abgas- und Drehmomentwerten mit einer mit der zu prüfenden Brennkraftmaschine kraftschlüssig verbundenen Belastungseinheit und einer Rechnereinheit zur Erfassung der Meßgrößen, wobei die Rechnereinheit zusammen mit der Belastungseinheit eine Einheit zur Simulation der Betriebszustände eines Kraftfahrzeuges mit Automatikgetriebe bildet und wobei der Simulation einzelner Betriebszustände des Kraftfahrzeuges entsprechende Steuersignale erzeugt und an die Brennkraftmaschine sowie an die Belastungseinheit abgegeben werden, ist dadurch gegeben, daß in der Rechnereinheit eine Speichereinheit vorliegt, in welcher das stationäre Wandlerkennfeld des Automatikgetriebes, die Fahrzeug- und Fahrerparameter, und ein vorbestimmbares Fahrprofil gespeichert sind, sowie daß eine Ausgabeeinheit für die gewonnenen dynamischen Meßgrößen vorhanden ist.

Des weiteren kann erfindungsgemäß das Wandlerkennfeld des Automatikgetriebes, die Fahrzeug- und Fahrerparameter sowie das Fahrprofil auf zumindest einem maschinenlesbaren Datenträger vorliegen. Die in Fig. 1 dargestellte Rechnereinheit 5 weist dabei eine Speichereinheit 6 auf, in welche über maschinenlesbare Datenträger 7 das stationäre Wandlerkennfeld und alle übrigen für das Simulationsverfahren notwendigen Daten und Parameter eingegeben werden können. Über eine Ausgabeeinheit 8 können die gewonnenen Meßgrößen ausgelesen bzw. angezeigt werden.

Ein dynamischer Motorenprüfstand für die Simulation eines KFZ mit Automatikgetriebe bietet im Vergleich zum Rollen- oder Schwungmassenprüfstand große Vorteile : Die Belastung ist genau reproduzierbar und der Motor muß nicht an die jeweilige Getriebesteuerung angepaßt werden. D.h., ein Bowdenzug, ein Unterdrucksignal o.ä., ist nicht notwendig. Die Laststeuerungsgrößen werden berechnet und über die Belastungseinheit die entsprechenden Brems- bzw. Antriebsmomente aufgebracht. Wenn ein anderer Motor getestet wird, muß nicht das Getriebe samt Wandler ausgetauscht werden. Die Anpassung kann softwaremäßig erfolgen. Der Anwender bzw. Getriebehersteller kann ohne großen Aufwand die Wandlereigenschaften, die Schaltpunkte o.ä. ändern, und damit die Getriebeentwicklung in Hinsicht auf das Motorverhalten optimieren.

Um die Richtigkeit des erfindungsgemäßen Simulationsverfahrens zu testen, wurden die Meßergebnisse mit einem dynamischen Schwungmassenprüfstand verglichen. Ein serienmäßiger Motor und ein Automatikgetriebe wurden ohne Hinterachsübersetzung an eine Schwungmasse gekoppelt. Beim KFZ sind zumeist die Räder der nachgiebigste Teil ; diese fehlen beim Schwungmassenprüfstand. Dadurch ist die Steifigkeit und damit die Eigenfrequenz höher als beim KFZ. Um das auszugleichen, wurde ein elastisches Zwischenstück eingebaut,

Gemessen wurden die Motor- und die Abtriebsdrehzahl sowie das Wellen- und das Abtriebsmoment (nm, nr bzw. Mw, Ma ; vgl. Fig. 5). Um das Wellenmoment zu messen, war es notwendig, zwischen Motor und Wandler eine Meßwelle anzubringen. Diese Messung ist ziemlich aufwendig und bringt auch einige Probleme mit sich, wie z.B. Drift, plötzliche Sprünge und den Einfluß der Eigen- und der biegekritischen Frequenz. Für eine qualitative Beurteilung, insbesondere des Schwingungsverhaltens, sind die Meßergebnisse des Wellenmomentes Mw aber verwendbar.

In Fig. 8 sind die vier Meßwerte für eine Vollastbeschleunigung aus der Prüfstandsmessung dargestellt. Dabei wird vom 1. in den 2. und dann in den 3. Gang geschaltet. Betrachtet man den Verlauf des Abtriebsmomentes, so erkennt man zu Beginn einen Momentenstoß, der eine Schwingung bewirkt (Punkt A). Wenn der Hochschaltvorgang beginnt, sinkt das Abtriebsmoment kurz ab, bei einer Freilaufschaltung weniger (Punkt B), bei einer Überschneidungsschaltung mehr (Punkt E). Danach wird die Motordrehzahl gegen die Wirkung des Vollastmomentes durch die Kupplungsmomente hinuntergezogen — das Abtriebsmoment Ma steigt stark an (Punkt C). Schließlich ist der Schaltvorgang beendet, das Abtriebsmoment fällt stark ab — daraus ergibt sich eine Nachschwingung (Punkt D), die sich auch auf das Wellenmoment auswirkt (Punkt F).

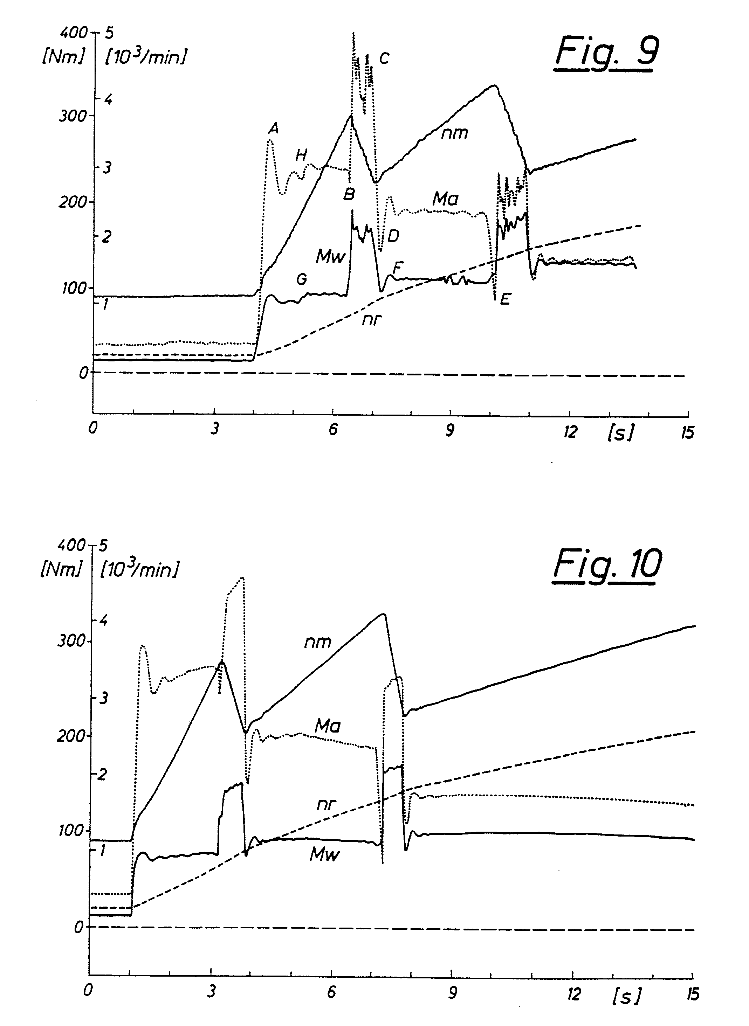

Bei den Versuchen zeigte es sich, daß — auch bei gleichen Randbedingungen — der Verlauf der Kurven selten reproduzierbar ist. Vergleicht man z.B. den Zyklus nach Fig. 8 mit dem nach Fig. 9, welcher unter gleichen Randbedingungen aufgenommen wurde, so erkennt man vor allem beim Schaltmoment (Punkt C) eine Abweichung. Noch stärker können diese Abweichungen werden, wenn sich die Randbedingungen ändern. Die Größe mit dem stärksten Einfluß ist dabei die Öltemperatur.

Das bedeutet für den Motorenentwickler, daß sich beim Austesten des Motors die Belastungsbedingungen nicht genau wiederholen lassen — Auswirkungen von Modifikationen am Motor können durch unterschiedliches Verhalten des Getriebes überdeckt werden.

Um eine Grundlage für den Vergleich mit berechneten Kurven zu haben, müssen viele Versuche gefahren und die häufigste Kurvenform verwendet werden. Für einen Hochfahrvorgang ist das die Kurve nach Fig. 9.

Das erfindungsgemäße Simulationsverfahren wurde gemäß den Angaben des Getriebeherstellers parametriert. Im vorliegenden Fall wurde auch der Motor mitsimuliert und ein vom Hersteller angegebenes Motorkennfeld verwendet. Gewisse Abweichungen zwischen diesem Kennfeld und dem realen machen sich natürlich auch bei den Vergleichen zwischen Messung und Simulationsverfahren bemerkbar. So rühren z.B. der Sprung des Wellenmomentes Mw bei Punkt G in den Fig. 8 und 9 und—und als Folge dieses Sprunges—die Schwingung des Abtriebsmomentes Ma bei Punkt H von einer Unregelmäßigkeit beim Motorverhalten her.

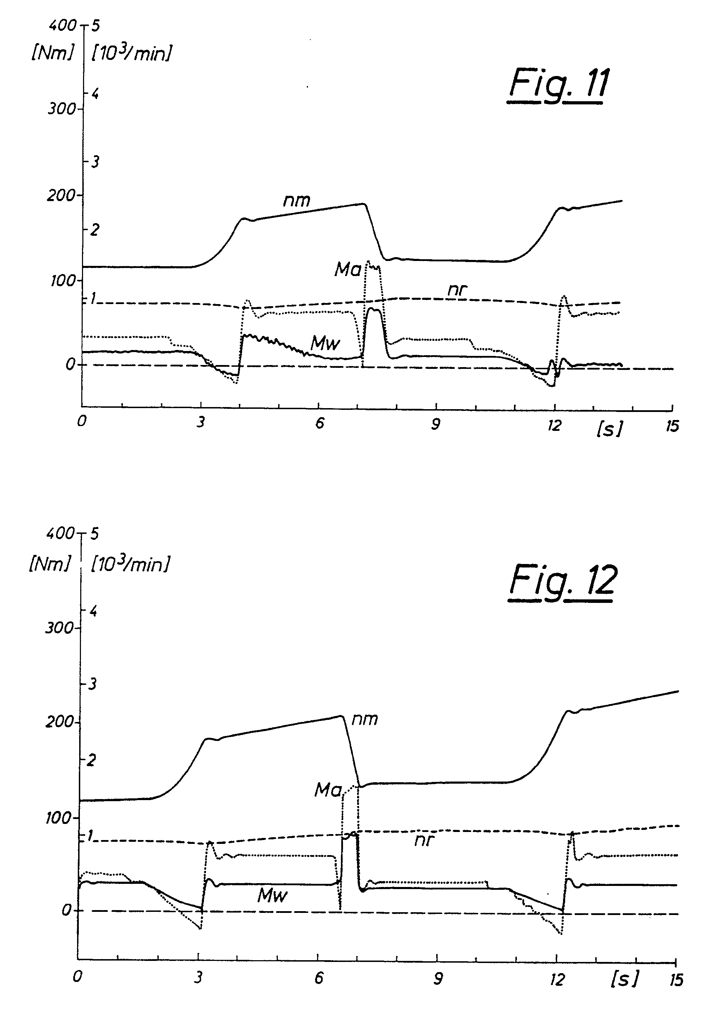

Man vergleiche den gemessenen (Fig. 9) und den nach dem vorliegenden Verfahren berechneten Zyklus (Fig. 10). Beim Abtriebsmonent zeigen sich lediglich beim Schalten geringe Abweichungen, die aber mit keinem Simulationsverfahren korrigierbar sind, da die "Rupfer" beim gemessenen Zyklus keinen gesetzmäßigen Verlauf haben. Sonst zeigt sich eine gute Übereinstimmung, insbesondere beim Schwingungsverhalten. Das Ausmaß der Übereinstimmung erkennt man auch am Verlauf der Motordrehzahl nm.

In Fig. 11 ist ein Rück- und Hochschaltvorgang, ausgelöst durch ein Betätigen des Wahlhebels, dargestellt. Vergleicht man dazu den nach dem vorliegenden Verfahren erhaltenen Zyklus nach Fig. 12 erkennt man auch hier eine gute Übereinstimmung.

## Patentansprüche

1. Verfahren zur Bestimmung dynamischer Meßgrößen von Brennkraftmaschinen, beispielsweise von Beschleunigungs-, Abgas-, Drehzahl- und Drehmomentwerten, wobei die zu prüfende Brennkraftmaschine (2) an eine Belastungseinheit (1) gekuppelt wird und die dynamischen Meßgrößen der Brennkraftmaschine (2) einer Rechnereinheit (5) zugeführt werden, wobei der Betrieb eines Kraftfahrzeuges mit Automatikgetriebe in der Rechnereinheit (5) simuliert wird und wobei der Simulation einzelner Betriebszustände des Kraftfahrzeuges entsprechende Steuersignale erzeugt und an die Brennkraftmaschine (2) sowie an die Belastungseinheit (1) abgegeben werden, dadurch gekennzeichnet, daß das System Brennkraftmaschine-Kraftfahrzeug als Zwei-Massen-Schwinger mit einem bestimmten Feder- und Dämpfungswert dargestellt wird, welcher über den Wandler des Automatikgetriebes, dargestellt durch sein stationäres Wandlerkennfeld, gekoppelt wird, sowie daß die dabei gewonnenen dynamischen Meßgrößen eindeutig einzelnen Betriebszuständen des simulierten Kraftfahrzeuges zugeordnet werden.

2. Verfahren nach Anspruch 1, dadurch gekennzeichnet, daß der Feder- und der Dämpfungswert des Systems Brennkraftmaschine-Kraftfahrzeug aus der vorgebbaren Eigenfrequenz und aus dem gewünschten Dämpfungsverhalten des Systems Brennkraftmaschine-Kraftfahrzeug ermittelt werden.

3. Verfahren nach Anspruch 1 oder 2, dadurch gekennzeichnet, daß ein von der Geschwindigkeit (v) des simulierten Kraftfahrzeuges und einem Laststeuerungssignal (lss) der Brennkraftmaschine (2) abhängiges Schaltkennfeld zur Darstellung der Automatiksteuerung (AS) des Automatikgetriebes (KG) verwendet wird, wobei die für die Getriebesteuerung notwendigen Eingangsgrößen, wie Fahrzeuggeschwindigkeit (v) und Getriebelastsignal (ls) errechnet, die Motordrehzahl (nm) und die Lasthebelstellung (lh) erfaßt und der Rechnereinheit (5) zugeführt werden.

4. Verfahren nach einem der Ansprüche 1 bis 3, dadurch gekennzeichnet, daß eine bei bestimmten Betriebszuständen wirksam werdende Wandlerüberbrückung (Wü), welche im Kraftfluß parallel zum Wandler (P, T) des Automatikgetriebes (KG) angeordnet ist, berücksichtigt wird.

5. Verfahren nach einem der Ansprüche 1 bis 4, dadurch gekennzeichnet, daß die für das Getriebe (KG) und die Wandlerpumpe (P) angenommenen oder berechneten Verlustmomente (Mvg und Mvp) bei Ansteuerung der Belastungseinheit (1) additiv berücksichtigt werden.

6. Verfahren nach einem der Ansprüche 1 bis 5, dadurch gekennzeichnet, daß der Betriebszustand "Fahrzeugstillstand", während dem die Brennkraftmaschine (2) gegen den Wandler (P, T) des Automatikgetriebes (KG) arbeitet, durch eine Bremsfunktion realisiert wird.

7. Verfahren nach einem der Ansprüche 1 bis 6, dadurch gekennzeichnet, daß der Rechnereinheit (5) ein vorzugsweise für die Erfüllung bestimmter Normen, wie Abgasvorschriften oder Leistungswerte der Brennkraftmaschine (2) vorgeschriebenes Fahrprofil eingegeben wird.

8. Verfahren nach einem der Ansprüche 1 bis 7, dadurch gekennzeichnet, daß die Rechnereinheit (5) einen Sollwert (Ms) für das Drehmoment an die Belastungseinheit (1) abgibt.

9. Motorenprüfstand zur Erfassung dynamischer Meßgrößen von Brennkraftmaschinen, beispielsweise von Beschleunigungs-, Abgas- und Drehmomentwerten mit einer mit der zu prüfenden Brennkraftmaschine (2) kraftschlüssig verbundenen Belastungseinheit (1) und einer Rechnereinheit (5) zur Erfassung der Meßgrößen, wobei die Rechnereinheit (5) zusammen mit der Belastungseinheit (1) eine Einheit zur Simulation der Betriebszustände eines Kraftfahrzeuges mit Automatikgetriebe bildet und wobei der Simulation einzelner Betriebszustände des Kraftfahrzeuges entsprechende Steuersignale erzeugt und an die Brennkraftmaschine (2) sowie an die Belastungseinheit (1) abgegeben werden, dadurch gekennzeichnet, daß in der Rechnereinheit (5) eine Speichereinheit (6) vorliegt, in welcher das stationäre Wandlerkennfeld des Automatikgetriebes, die Fahrzeug- und Fahrerparameter, und ein vorbestimmbares Fahrprofil gespeichert sind, sowie daß eine Ausgabeeinheit (8) für die gewonnenen dynamischen Meßgrößen vorhanden ist.

10. Motorenprüfstand nach Anspruch 9, dadurch gekennzeichnet, daß das Wandlerkennfeld des Automatikgetriebes (GK), die Fahrzeug- und Fahrerparameter sowie das Fahrprofil auf zumindest einem maschinenlesbaren Datenträger (7) vorliegen.

## Claims

1. Method of determining dynamic quantities of internal combustion engines, for example acceleration, exhaust gas, speed and torque values, the engine (2) under test being coupled to a dynamometer (1) and the dynamic quantities of the engine (2) being fed to a computer (5), in which the operation of a motor vehicle with automatic transmission is simulated in the computer (5), and in which the simulation produces control signals corresponding to individual operating conditions of the motor vehicle and they are delivered to the engine (2) and to the dynamometer (1), characterised in that the engine-vehicle system is represented as a two-mass vibrating system with a predetermined spring and damping characteristic, which is coupled through the converter of the automatic transmission, represented by its stationary converter characteristic, and that the dynamic magnitudes thereby obtain are uniquely associated with individual operating states of the simulated motor vehicle.

2. Method according to claim 1 characterised in that the spring and damping value of the engine-vehicle system are determined from the pre-ascertained characteristic frequency and from the desired damping behaviour of the engine-vehicle system,

3. Method according to claim 1 or 2 characterised in that a circuit characteristic dependent on the speed (v) of the simulated motor vehicle and on a load control signal (lss) of the internal combustion engine (2) is used to represent the automatic control (AS) of the automatic transmission (KG), the input magnitudes necessary for controlling the transmission, such as vehicle speed (v) and transmission load signal (ls) being calculated, and the engine speed (nm) and the throttle pedal position (lh) being obtained and fed to the computer (5).

4. Method according to one of claims 1 to 3 characterised in that a converter bypass path (Wu) which is arranged in the power flow path in parallel with the converter (P, T) of the automatic transmission (KG), and becomes effective under predetermined operating conditions, is taken into account

5. Method according to one of claims 1 to 4 characterised in that the torque losses (Mvg and Mvp) assumed or calculated for the transmission (KG) and the converter pump (P) are taken into account additively in controlling the dynamometer (1).

6. Method according to one of claims 1 to 5 characterised in that the operating condition 'vehicle stationary', during which the internal combustion engine (2) works against the converter (P, T) of the automatic transmission (KG), is realised by a braking function.

7. Method according to one of claims 1 to 6 characterised in that the computer (5) has fed into it a driving profile preferably for fulfilling predetermined norms, such as exhaust gas requirements or performance values of the engine (2).

8. Method according to one of claims 1 to 7 characterised in that the computer (5) produces a desired value (Ms) for the torque on the dynamometer (1).

9. Engine test bench for determining dynamic quantities of internal combustion engines, for example acceleration, exhaust gas and torque values with a dynamometer unit (1) mechanically connected to the internal combustion engine (2) to be tested and a computer unit (5) for receiving the measured magnitudes, in which the computer unit (5) together with the dynamometer unit (1) represent a unit simulating the operating conditions of a motor vehicle with automatic transmission, and in which the simulation of individual operating conditions of the motor vehicle produces corresponding control signals and delivers them to the engine (2) and to the dynamometer (1), characterised in that there is present in the computer unit (5) a memory unit (6) for storage of the stationary converter characteristic of the automatic transmission, the vehicle parameters and driver parameters, and a predetermined driving profile, as well as an output unit (8) for the dynamic magnitudes obtained.

10. Engine test bench according to claim 9 characterised in that the converter characteristic of the automatic transmission (GK), the vehicle parameters and driver parameters as well as the driving profile are present on at least one machine-readable data carrier (7).

## Revendications

1. Procédé pour la détermination des grandeurs de mesure, dynamiques de moteurs à combustion interne, par exemple des valeurs d'accélération, grandeurs liées aux gaz d'échappement et des grandeurs couples de rotation, le moteur à tester (2) étant accouple à une unité de charge (1) et les grandeurs dynamiques du moteur (2) étant fournies à une unité de calcul (5), simulant le fonctionnement d'un véhicule à boîte de vitesses automatique, la simulation des différents états de marche du véhicule automobile créant des signaux de commande correspondants qui sont transmis au moteur (2) ainsi qu'à l'unité de charge (7), caractérisé en ce que le système véhicule-moteur est représenté comme oscillateur à deux masses avec un coefficient d'élasticité et d'amortissement déterminé, système couplé sur le convertisseur de la boîte de vitesses automatique, représenté par son champ caractéristique fixe et en ce que les grandeurs de mesure dynamiques ainsi obtenues sont associées équivoque aux différents états de marche du véhicule automobile simulé.

2. Procédé selon la revendication 1, caractérisé en ce que le coefficient d'élasticité et la valeur d'amortissement du système-moteur véhicule sont déterminés à partir de la fréquence propre déterminée au préalable et du comportement d'amortissement souhaité du système moteur-véhicule.

3. Procédé selon la revendication 1 ou la revendication 2, caractérisé en ce qu'un champ caractéristique de changement de vitesses fonction de la vitesse (v) du véhicule simulé et d'un signal de commande de charge (lss) du moteur (2) est utilisé pour représenter la commande automatique (AS) de la boîte de vitesses automatique (KG), les grandeurs d'entrée nécessaires à la commande de la boite de vitesses, comme la vitesse du véhicule (v) et le signal de charge de la boite de vitesses (ls) étant calculées, la vitesse de rotation du moteur (nm) et la position du levier de charge (lh) étant détectés et transmis à l'unité de calcul (5).

4. Procédé selon l'une des revendications 1 à 3, caractérisé en ce qu'on tient compte d'un pontage du convertisseur, (Wü) activé pour certains états de marche, disposé dans le flux de force en parallèle au convertisseur (P, T) de la boîte de vitesses automatique (KG).

5. Procédé selon l'une des revendications 1 à 4, caractérisé en ce que les pertes de couple présumées ou calculées (mvg et mvp) pour la boîte de vitesses (KG) et la pompe du convertisseur (P) sont pris en considération de façon additionnelle pour la commande de l'unité de charge (1).

6. Procédé selon l'une des revendications 1 à 5, caractérisé en ce que l'état de marche "arrêt du véhicule", pendant lequel le moteur (2) travaille contre le convertisseur (P, T) de la boîte de vitesses automatique (KG), est réalisé par une fonction de freinage.

7. Procédé selon l'une des revendications 1 à 6, caractérisé en ce qu'on introduit dans l'unité de calcul (5) un profil de parcours préétabli, de préférence pour le respect de certaines normes, comme des prescriptions pour les gaz d'échappement ou des valeurs de puissance du moteur (2).

8. Procédé selon l'une des revendications 1 à 7, caractérisé en ce que l'unité de calcul (5) délivre une valeur de consigne (MS) à l'unité de charge (1) pour le couple de rotation.

9. Banc d'essai de moteurs pour détecter des grandeurs de mesure dynamiques de moteurs à combustion interne, par exemple des valeurs de vitesse et des grandeurs liées aux gaz d'échappement et des valeurs de couple de rotation avec une unité de charge (1) reliée par une liaison par la force au moteur (2) à essayer et une unité de calcul (5) pour saisir les grandeurs, banc d'essai dans lequel l'unité de calcul (5) forme avec l'unité de charge (1) forme un ensemble pour simuler des états de marche d'un véhicule à boîte de vitesses automatique et dans lequel la simulation des différents états de marche de l'automobile produit des signaux de commande correspondants qui au moteur (2) ainsi qu'à l'unité de charge (2), caractérisé en ce que l'unité de calcul (5) comporte une mémoire (6), dans laquelle sont enregistrés le champ caractéristique fixe du convertisseur de la boîte de vitesses automatique, les paramètres du véhicule et du conducteur et un profil de parcours préfixé et en ce qu'une unité de sortie (8) existe pour les quantités dynamiques obtenues.

10. Banc d'essai de moteurs selon la revendication 9, caractérisé en ce que le champ caractéristique du convertisseur de la boîte de vitesses automatique (GK), les paramètres eu véhicule et du conducteur ainsi que le profil de parcours existent sur au moins un support de données (7) exploitable par une machine.

_Fig.1_

_Fig. 2_

_Fig. 3_

Fig. 4

Fig. 6a

Fig. 6b

*Fig. 5*

_Fig. 7a_

_Fig. 7b_

_Fig. 8_

_Fig. 9_

_Fig. 10_

_Fig. 11_

_Fig. 12_